(19) Europäisches Patentamt

European Patent Office

Office européen des brevets

(11) Veröffentlichungsnummer: **0 459 161 B1**

(12) **EUROPÄISCHE PATENTSCHRIFT**

(45) Veröffentlichungstag der Patentschrift: **21.12.94**

(21) Anmeldenummer: **91106964.9**

(22) Anmeldetag: **30.04.91**

(51) Int. Cl.⁵: **C08F 6/22**

(54) Verfahren zur kontinuierlichen Koagulation von Vinylpolymerisatlatices.

(30) Priorität: **12.05.90 DE 4015296**

(43) Veröffentlichungstag der Anmeldung:
**04.12.91 Patentblatt 91/49**

(45) Bekanntmachung des Hinweises auf die
Patenterteilung:
**21.12.94 Patentblatt 94/51**

(84) Benannte Vertragsstaaten:
**DE ES FR GB IT NL**

(56) Entgegenhaltungen:
**EP-A- 0 217 006**
**EP-A- 0 333 879**
**FR-A- 2 211 483**

(73) Patentinhaber: **BAYER AG**

**D-51368 Leverkusen (DE)**

(72) Erfinder: **Jansen, Ulrich, Dr.**
**Stürzelberger Strasse 50**
**W-4047 Dormagen 5 (DE)**
Erfinder: **Ott, Karl-Heinz, Dr.**
**Paul-Klee-Strasse 54**
**W-5090 Leverkusen 1 (DE)**
Erfinder: **Herrig, Wolfgang, Dr.**
**Rommerscheider Strasse 43**
**W-5060 Bergisch-Gladbach 2 (DE)**
Erfinder: **Koch, Otto, Dr.**
**Haferkamp 3**
**W-5000 Köln 80 (DE)**
Erfinder: **Pischtschan, Alfred, Dr.**
**Zur Eiche 33**
**W-5067 Kürten-Eichhof (DE)**
Erfinder: **Wittmann, Dieter, Dr.**
**Wolfskaul 4**
**W-5000 Köln 80 (DE)**

**Beschreibung**

Gegenstand der Erfindung ist ein Verfahren zur kontinuierlichen Aufarbeitung von Vinylpolymerisatlatices zu thermoplastisch verarbeitbaren Vinylpolymerisatpulvern, indem man einem Strom eines Vinylpolymerisatlatex durch Zufügen eines Stromes eines Koagulans unter intensiver Durchmischung und Scherung in einer Kesselkaskade bei einer mittleren Verweilzeit pro Kessel von 10 bis 60 Minuten und bei Temperaturen von 50 bis 120°C koaguliert, wobei gegebenenfalls flüchtige Hilfsstoffe und restliche Monomere im Polymerisat durch Wasserdampfdestillation entfernt werden und ein Teil des vom Vinylpolymerisat abgetrennten Serums dem Strom des Koagulans zugefügt wird.

Erfindungsgemäß aufarbeitbare Vinylpolymerisatlatices enthalten unvernetzte oder teilvernetzte Polymerisate. Sie können hergestellt werden durch Homo-, Co- und/oder Pfropfpolymerisation in wäßriger Emulsion. Geeignete Monomere sind grundsätzlich alle polymerisierbaren olefinisch ungesättigten Verbindungen, bevorzugt sind Monovinylverbindungen wie Vinylaromaten (Styrol, Styrolderivate), ungesättigte Nitrile (Acrylnitril, Methacrylnitril), Acrylsäure- und Methacrylsäurederivate (Acrylsäurealkylester mit 1 bis 8 Kohlenstoffatomen, wie Butylacrylat; Methacrylsäurealkylester mit 1 bis 8 Kohlenstoffatomen wie Methylmethacrylat), N-Alkyl- bzw. N-Aryl-substituierte Maleinsäureimide sowie Divinylverbindungen beispielsweise konjugierte Diene (Butadien, Isopren, Chloropren). Alle Monomere können einzeln oder in beliebigen Kombinationen verwendet werden. Die auf diese Weise erhaltenen Polymerisate sind bekannt ebenso wie ihre Latices.

Erfindungsgemäß aufarbeitbar sind auch Latexgemische wobei die Mischungen vor oder auch während der Aufarbeitung hergestellt werden können. Man kann also Latices mischen und die Mischung kontinuierlich aufarbeiten oder zwei oder mehr Ströme von Latices gleichzeitig mit dem Strom des Koagulans vereinigen (vgl. DE-A 1 694 918, DE-A-2 952 495, EP-A-0 121 855). Die Koagulation von Polymerisatlatices zur Gewinnung der Polymerisate in fester Form ist grundsätzlich bekannt. So beschreibt DE-A 2 021 398 die Koagulation von Pfropfpolymerisatlatices bei Temperaturen ≧80°C mit Hilfe von Elektrolytlösungen. Aus US-PS 4 399 273 ist bekannt, einen Latex eines Acrylnitril-Butadien-Styrol-Polymerisats (ABS) durch Zusatz einer Säure oder eines anderen Elektrolyten zu koagulieren und die restlichen Monomeren durch Einleiten von Wasserdampf zu entfernen. Bei dieser Arbeitsweise fallen sehr große Mengen Abwasser an, die aufbereitet werden müssen. Die Wasserdampfdestillation (Strippen) zum Entfernen der restlichen Monomeren wird diskontinuierlich ausgeführt, so daß hierfür Zwischenlager und eigene Kessel erforderlich sind. Wegen der diskontinuierlichen Arbeitsweise werden auch Schwankungen in der Produktqualität beobachtet.

DE-A-2 815 098 beschreibt ein kontinuierliches Fällverfahren zur Aufarbeitung von Kautschuklatices. Hier wird mit einer Kaskade von Wannen gearbeitet, die durch Überläufe miteinander verbunden sind. Da hier mit offenen Wannen gearbeitet wird, können restliche Monomere und flüchtige Bestandteile nicht abgetrennt werden.

Ein befriedigendes Verfahren zur kontinuierlichen Aufarbeitung von Vinylpolymerisatlatices zu thermoplastisch verarbeitbaren Vinylpolymerisatpulvern hat also bislang nicht existiert.

Das eingangs beschriebene erfindungsgemäße Verfahren erlaubt es nun 10 bis 95 Gew.-% des Serums, d.h. der vom Polymerisat abgetrennten wäßrigen Phase der gesamten Fälldispersion, vermischt mit dem Koagulans in den Koagulationsprozeß zurückzuführen. Damit wird die Menge an neu zuzusetzendem Koagulans stark vermindert und ebenfalls die Gesamtmenge des anfallenden Serums. Gleichzeitig können restliche Monomere durch Wasserdampfdestillation kontinuierlich ausgeschleust werden. Im allgemeinen gelingt es 10 bis 95 % der Monomeren auf diese Weise zu entfernen.

Durch das erfindungsgemäße Verfahren können je nach der rückgeführten Serum-Menge etwa 50 % der Koagulationshilfsstoffe sowie große Mengen des für die Koagulation benötigten Wassers eingespart werden.

Darüber hinaus können die durch die Wasserdampfdestillation abgetrennten, nicht umgesetzten Monomeren nach Separierung in einem Verweilgefäß wieder zur Polymerisation verwendet werden.

Die erfindungsgemäß erhaltenen Polymerisat-Pulver weisen gute Gesamteigenschaften auf, so sind z.B. die Pulver-Eigenschaften (Korngrößen-Verteilung) sowie die Verarbeitbarkeit (Silierfähigkeit) einwandfrei. Auch die Eigenschaften der aus den erfindungsgemäß erhaltenen Polymerisatpulvern hergestellten thermoplastischen Formmassen sind gut. Erfindungsgemäß hergestellte Polymerisatpulver ergeben nach Verarbeitung zu ABS bzw. Polymerisat-Blends Formteile mit guter Oberflächenqualität.

Das erfindungsgemäße Verfahren wird im folgenden näher beschrieben:

Für die erfindungsgemäße Aufarbeitung geeignete Vinylpolymerisat-Latices sind Vinylhomo- oder -copolymerisate, hergestellt durch Emulsionspolymerisation z.B. von Styrol, α-Methylstyrol, Vinyltoluol, Acrylnitril, Methacrylnitril, Acryl- bzw. Methacrylsäureester, N-Alkyl- oder N-Aryl-substituiertem Acryl- bzw. Methacrylamid oder N-Alkyl- bzw. N-Aryl-substituierten Maleinsäureimiden oder Mischungen dieser Monomeren.

2

Auch Pfropfpolymerisatlatices von Vinylverbindungen auf einen teilvernetzten, teilchenförmigen Kautschuk mit mittleren Teilchendurchmessern ($d_{50}$) von 50 bis 1000 nm können verwendet werden.

Pfropfpolymerisierte Vinylverbindungen sind z.B. Styrol, $\alpha$-Methylstyrol, Acrylnitril, Methylmethacrylat und Alkylacrylat oder deren Mischungen; besonders bevorzugt sind Methylmethacrylat sowie Mischungen von Styrol und Acrylnitril, von $\alpha$-Methylstyrol und Acrylnitril, von Methylmethacrylat und Styrol, von Methylmethacrylat und Alkylacrylat, von $\alpha$-Methylstyrol, Methylmethacrylat und Acrylnitril. Als Kautschuke (Pfropfgrundlagen) kommen Dienhomo- und -Copolymerisate z.B. von Butadien, Isopren, Chloropren, gegebenenfalls mit bis zu 35 Gew.-% Comonomeren wie Styrol, Acrylnitril, Methylmethacrylat, Alkylacrylat, Vinylmethylether in Betracht oder Alkylacrylat-Polymerisate (insbesondere von $C_1$-$C_8$-Alkylacrylaten), die gegebenenfalls bis zu 20 Gew.-% Vinylmonomere, wie Styrol, Acrylnitril, Vinylacetat, $C_1$-$C_8$-Alkylmethacrylat einpolymerisiert enthalten; die Acrylatkautschuke sind meist durch Einpolymerisieren polyfunktioneller Vinyl- oder Allylmonomere partiell vernetzt; vernetzende Monomere sind z.B. Bis-Acrylate, Bis-Acrylamide, Butadien, Acrylsäurevinylester, Triallylcyanurat, Trialkylisocyanurat, Zitronensäuretrisallylester, Bis-Carbonsäurevinylester.

Acrylatkautschuke enthalten die vernetzenden Monomere in Mengen bis maximal 5 Gew.-%, Die Kautschuke können auch Kern/Mantel-Struktur besitzen, d.h. die Acrylatkautschukpartikel enthalten einen Kautschukkern, der sich strukturell von dem ihn umgebenden Acrylatkautschuk unterscheidet, oder einen harten Thermoplastharzkern.

Die Pfropfpolymerisat-Latices enthalten im allgemeinen 30 bis 90 Gew.-% Kautschuk, bevorzugt 50 bis 85 Gew.-%.

Die Vinylpolymerisatlatices können in bekannter Weise durch Emulsionspolymerisation in wäßrigen Medien bzw, Emulsionspfropfpolymerisation in Gegenwart von Kautschuklatices hergestellt werden. Im Falle von kautschukfreien Polymerisaten werden die Monomere bei pH-Werten von ca. 12 bis 2, insbesondere von 10 bis 3, radikalisch in Gegenwart von Seifen (Emulgatoren) in wäßrigem Medium polymerisiert. Als Initiatoren kommen insbesondere wasserlösliche Radikalbildner wie Peroxodisulfate, Peroxodiphosphate, wasserlösliche Hydroperoxide und Peroxosäuren in Betracht, sowie Redoxinitiatorsysteme. Die Polymerisation, die normalerweise bei 40 bis 90°C durchgeführt wird, erfordert die Anwesenheit eines ionischen Emulgators, insbesondere eines anionischen Emulgators, in Mengen bis zu 4 Gew.-%, bevorzugt bis zu 2,5 Gew.-%, bezogen auf die Monomere. Geeignete Emulgatoren sind beispielsweise Fettsäuresalze, Alkylsulfonsäuresalze mit längerkettigen Alkylresten und Schwefelsäurealkylhalbester mit längerkettigen Alkylresten sowie bevorzugt Alkalisalze der disproportionierten Abietinsäure.

Die so hergestellten Vinylpolymerisat-Latices weisen i.a. einen Polmerfeststoffgehalt von 10 bis 70 Gew.-%, vorzugsweise von 25 bis 50 Gew.-% auf. Der Anteil an nicht polymerisierten Monomeren im Latex beträgt in der Regel 0 bis 15 Gew.-%, vorzugsweise 0 bis 5 Gew.-% bezogen auf den Polymerfeststoffgehalt des Latex. Die Größe der Vinylpolymerisat-Latexteilchen beträgt 50 bis 1000 nm, vorzugsweise 80 bis 650 nm.

Das erfindungsgemäße Verfahren läßt sich auch für die Aufarbeitung von Latexgemischen verwenden, wobei es je nach Latextyp vorteilhaft sein kann, die Latices nicht nach vorheriger Mischung zu dosieren sondern getrennt parallel oder stufenweise in die Koagulationsdispersion einzubringen.

Als Koagulans verwendet man vorzugsweise wäßrige Lösungen von wasserlöslichen anorganischen oder organischen Säuren und/oder Salzen, wie Salzsäure, Schwefelsäure, Phosphorsäure, Borsäure, Ameisensäure, Essigsäure, Propionsäure, Zitronensäure, Alkali- und Erdalkali-chloride, -sulfate, -formiate, -acetate, -phosphate, -carbonate, Aluminate, teilverseifte Polyvinylacetate gegebenenfalls in Kombinationen mit anorganischen oder organischen Säuren. Je nach zu koagulierender Vinylpolmerisatlatexmischung benutzt man 0,2 bis 25 gew.-%ige wäßrige Lösungen.

Dem Koagulans wird ein Teil des Serums, das von dem gefällten Polymerisat abgetrennt worden ist, zugefügt oder gleichzeitig mit dem Koagulans zum Polymerisatlatex gegeben. Mit Serum wird hier das Filtras der Fälldispersion nach Abtrennung des mit Restfeuchte behafteten Polymerisats bezeichnet.

Entsprechend wird im folgenden die aus zugefügtem Koagulans und Serum bestehende Flüssigkeit als Fällflotte bezeichnet.

Die Fällflotte besteht somit erfindungsgemäß zu mindestens 10 Gew.-%, bevorzugt zu 50 bis 99 Gew.-% aus Serum, der Rest ist Koagulans.

Das erfindungsgemäße Verfahren wird in einer Kaskade von mindestens 3, vorzugsweise 4 oder mehr hintereinander geschalteten Reaktoren, die untereinander wahlweise durch Über- und/oder Unterläufe, vorzugsweise durch Unterläufe verbunden sind, durchgeführt.

Die Latices können bei Temperaturen von 50 bis 120°C und Drücken von 0,2 bis 1,5 bar koaguliert werden. Hierbei können die einzelnen Fällreaktoren verschiedene oder gleiche Temperaturen aufweisen, bevorzugt wird im ersten Fällreaktor eine Temperatur von 50 bis 100°C, vorzugsweise von 85 bis 95°C. In einer besonderen Ausführung des Verfahrens sind die Reaktoren der Fällkaskade, in der die Fälldispersion in der Siedehitze geführt wird durch Unterläufe miteinander verbunden. Die mittlere Verweilzeit der Fälldispersion pro Reaktor beträgt je nach Polymerisattyp 10 bis 60 Minuten, vorzugsweise 15 bis 35 Minuten. Die Menge von Vinylpolymerisatlatex und Fällflotte (wäßriger Lösung des Koagulans und Serum) wird so aufeinander abgestimmt, daß der Polymerfeststoffgehalt in der Fälldispersion bei 5 bis 50 Gew.-%, vorzugsweise bei 15 bis 40 Gew.-% liegt.

Vinylpolymerisatlatex und Fällflotte können gemeinsam über eine Mischdüse in den ersten Reaktor der Fällkaskade eingebracht werden. Auch eine Dosierung in Teilströmen parallel oder stufenweise in verschiedene Reaktoren ist möglich. Vorzugsweise wird die gesamte Fällflotte in den ersten Reaktor der Fällkaskade eingebracht.

Das Serum wird erhalten als Filtrat nach Ablauf aus dem letzten Reaktor der Fällkaskade. Ebenso wesentlich ist, daß die Teilströme der Fällflotte so eingestellt werden, daß die Konzentration des Koagulans in der Fällkesselkaskade stationär bleibt. Häufig werden die Teilströme der Fällflotte aus Koagulans und Serum zusammengeführt und gemeinsam in die Kesselkaskade dosiert.

Erfindungsgemäß können restliche Monomere bei der Aufarbeitung von Vinylpolymerisatlatices oder Latexmischungen durch kontinuierliche Wasserdampfdestillation abgetrennt werden. Diese auch "Strippen" genannte Behandlung der Fälldispersion kann gleichzeitig und/oder (vorzugsweise) nach der Koagulation des Vinylpolymerisatlatex durchgeführt werden, wahlweise in einem oder mehreren Fällreaktoren. Bevorzugt sind die Fällreaktoren, in denen "gestrippt" wird, durch Unterläufe miteinander verbunden.

Die durch Filtrieren aus der Fälldispersion abgetrennten feuchten Vinylpolymerisatpulver können in bekannter Weise z.B. auf Bandpressen oder Schälschleudern gewaschen und anschließend getrocknet werden (z.B. in Heißlufttrocknern). Dabei werden die Polymerisate als Pulver mit guter Korngrößenverteilung, Rieselfähigkeit und Lagerstabilität sowie thermoplastischer Verarbeitbarkeit erhalten. Da die Polymerisatpulver thermoplastische Kunststoffe darstellen (z.B. ABS-Polymerisate) oder als Blendkomponente für Polycarbonat, Polyamid, PVC oder Polyester verwendet werden, um deren Eigenschaften z.B. Kerbschlagzähigkeit, Benzinbeständigkeit oder Verarbeitbarkeit zu verbessern, ist es entscheidend, daß sich das Pulver gut in kontinuierlich arbeitende Verarbeitungsvorrichtungen für Thermoplaste einspeisen läßt, sich mit der Schmelze des thermoplastischen Kunststoffs bei hohen Temperaturen vermischt und darin gleichmäßig verteilt oder löst. Die erfindungsgemäß aufgearbeiteten Produkte besitzen diese Eigenschaften.

Ausführungsbeispiele

Vinylpolymerisat-Latices

A) Mit Styrol und Acrylnitril im Gew.-Verhältnis 72:28 bepfropfter, teilvernetzter Polybutadienlatex (mittlerer Durchmesser der Latexteilchen $d_{50}$ = 400 nm) mit einem Polymerisatgehalt von 34,3 Gew.-% und einem Restmonomergehalt von 0,75 Gew.-%, bezogen auf Polymerisat. Das Pfropfpolymerisat enthält 50 Gew.-% Kautschuk.

B) Mit Styrol und Acrylnitril im Gew.-Verhältnis 72:28 bepfropfter, teilvernetzter Polybutadienlatex (mittlerer Durchmesser der Latexteilchen ($d_{50}$ = 110 nm) mit einem Polymerisatgehalt von 34,3 Gew.-% und einem Restmonomergehalt von 0,50 Gew.-%, bezogen auf Polymerisat. Das Pfropfpolymerisat enthält 50 Gew.-% Kautschuk.

C) Mit Styrol und Acrylnitril im Gew.-Verhältnos 72:28 bepfropfter, teilvernetzter Poly-n-butylacrylatlatex (mittlerer Durchmesser der Latexteilchen $d_{50}$ = 450 nm) mit einem Polymerisatgehalt von 39 Gew.-% und einem Restmonomergehalt von 0,65 Gew.-%, bezogen auf Polymerisat. Das Pfropfpolymerisat enthält 60 Gew.-% Kautschuk.

D) Mit Styrol und Acrylnitril im Gew.-Verhältnis 72:28 bepfropfter, teilvernetzter Poly-n-butylacrylatlatex (mittlerer Durchmesser der Latexteilchen $d_{50}$ = 130 nm) mit einem Polymerisatgehalt von 39 Gew.-% und einem Restmonomergehalt von 0,50 Gew.-%, bezogen auf Polymerisat. Das Pfropfpolymerisat enthält 30 Gew.-% Kautschuk.

E) Latex eines $\alpha$-Methylstyrol/Acrylnitril-Copolymerisats (Gew.-Verhältnis 72:28) mit einem mittleren Latexteilchendurchmesser $d_{50}$ = 90 nm) mit einem Polymerisatgehalt von 34,5 Gew.-% und einem Restmonomergehalt von 0,80 Gew.-%, bezogen auf Polymerisat.

Die Latices werden nach bekannten Methoden hergestellt (vgl. US-PS 4 399 273, US-PS 3 111 501). Die mittleren Latexteilchendurchmesser ($d_{50}$-Werte) wurden durch Ultrazentrifugenmessung bestimmt (W. Scholtan, H. Lange; Kolloidz. und Z. Polymere 250 (1972) 782-796).

Aufarbeitung

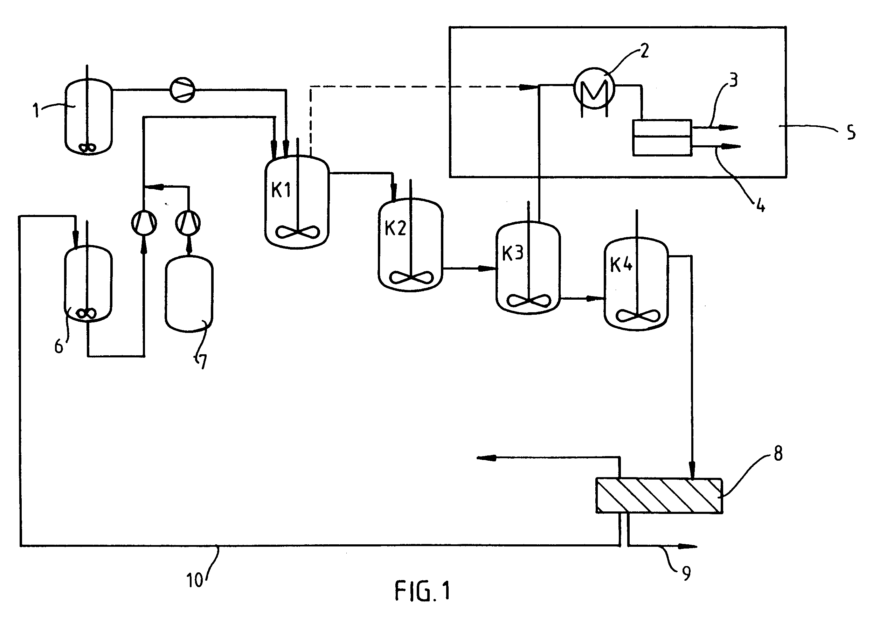

Die Koagulation wurde in einer Kaskade von 4 hintereinandergeschalteten 10 l Rührkesseln durchgeführt. Die Anordnung zeigt die Fig. 1. Es bedeuten:

1      Latex-Vorlagebehälter
2      Kühler
3      Monomerentnahme
4      Wasserabscheidung
5      Wasserdampfdestillation
6      Vorratsbehälter für rückgeführtes Serum
7      Vorratsbehälter für Koagulans
8      Filter
9      Abwasserleitung
10     Rückführleitung für Koagulans K1-K4 Fällreaktoren

Die Fällreaktoren K1 und K2 sind durch einen Überlauf, die Reaktoren K2, K3 und K4 durch einen Unterlauf miteinander verbunden. Latex und Fällflotte werden in den Fällreaktor K1 gegeben. Die am Überlauf des Fällreaktors K4 anfallende Fälldispersion wurde auf einem Filter 8 getrennt, das dort anfallende Serum in den in den Beispielen genannten Mengen in den Fällreaktor K1 zurückgeführt und der Rest entsorgt. Für eine Beurteilung der Pulverqualitäten wurde unter stationären Betriebsbedingungen der Fällkesselkaskade eine Probe entnommen und analysiert. Zur weiteren Aufarbeitung werden die abgetrennten feuchten Pulver mit Wasser elektrolytfrei gewaschen und im Vakuum bei 70° C auf Restfeuchten ≦0,5 Gew.-% getrocknet.

Analyse der getrockneten Polymerisatpulver

1. Analysiert wurde die Korngrößenverteilung mit einer Prüfsiebmaschine; die Prüfsiebe waren nach DIN 4188 genormt; die Siebmaschine arbeitete mit Vibrationssieben (Hersteller: Fa. Harer und Brecker, Typ EMC 200-61). Ergebnisse siehe Tabelle 1.
2. Druckbelastungstest Dazu wird in ein zylinderförmiges Rohr mit einem Innendurchmesser von 40 mm und einer Höhe von 60 mm Pulver bis zu einer Füllhöhe von 40 mm eingefüllt und mit einem Stempel (Durchmesser 38 mm) der Masse 3 kg 24 Stunden bei Zimmertemperatur belastet.

Danach wird der Rohrinhalt vorsichtig nach unten herausgedrückt und beurteilt: Leicht fließende Pulver bilden dann einen kegelförmigen Haufen oder einen bereits bei Berühren zerfallenden Zylinder (Bewertung +), während Verbackungen oder Verklumpungen zu stabilen säulenförmigen Körpern führen (Bewertung -), die nur durch festen Druck mit der Hand zu zerteilen sind. Die Ergebnisse der Druckbelastungstests sind in Tabelle 1 aufgeführt.
3. Eigenschaften aus Polymerisatpulvern hergestellter Formkörper

Die Vinylpolymerisatpulver werden in einem Innenkneter compoundiert und anschließend durch Spritzgießen Prüfkörper hergestellt (siehe Tabelle 2).

Messungen:

3.1 Die Kerbschlagzähigkeit wurde an Stäben der Abmessung 80 x 10 x 4 mm bei den in Tabelle 2 angegebenen Spritzgußtemperaturen ("MT") nach der Methode ISO 180 bei Zimmertemperatur gemessen.
3.2 Die Härte wurde als Kugeldruckhärte nach DIN 53 546 am 80 x 10 x 4 mm-Stab gemessen.
3.3 Die Wärmeformbeständigkeit wurde nach Vicat B 120 (DIN 53 460) bestimmt.
3.4 Die Oberflächenqualität (Rohton) wurde visuell nach +/o/-, der Glanzgrad nach DIN 67 530 an 75 x 155 x 2 mm Spritzgußteilen bestimmt.

Beispiele und Vergleichsbeispiele

Beispiel 1

Dem ersten Reaktor K1 der Fällkaskade wurden kontinuierlich 8,0 l/h Latex A und gleichzeitig insgesamt 10 l/h Fällflotte zugeführt. Die Fällflotte bestand aus einem Teilstrom 1 (9,5 l/h), enthaltend 0,15 Gew.-% Essigsäure und 0,54 Gew.-% Magnesiumsulfat, und einem Teilstrom 2 (0,5 l/h), enthaltend 2,8 Gew.-% Essigsäure und 6,3 Gew.-% Magnesiumsulfat, die innig mit dem Latex vermischt wurden. Die Temperaturen in den Fällreaktoren betrugen K1: 92 °C; K2: 95 °C; K3: 95 °C; K4: 80 °C. Die am Fällreaktor K4 überlaufende Fälldispersion wurde auf einem Filter getrennt. Nach 3 Stunden wurde das am Filter abgetrennte Serum anstelle des Teilstroms 1 der Fällflotte wieder in den Reaktor K1 zurückgeführt (Menge 9,5 l/h) und der Rest (2,5 l/h) entsorgt. Somit wurden 79 Gew.-% des Serums zurückgeführt.

Das am Filter abgetrennte Polymerisat (Restfeuchte 54 Gew.-%) wurde Elektrolyt-frei gewaschen und im Heißlufttrockner auf einen Restwassergehalt ≦0,5 Gew.-% getrocknet. Eine 30 Stunden-Probe wurde anwendungstechnisch untersucht (siehe Tabellen 1, 2).

Vergleichsbeispiel 1

Wie im Beispiel 1 wurden dem ersten Reaktor K1 der Fällkaskade kontinuierlich 8,0 l/h Latex A und gleichzeitig insgesamt 10 l/h Fällflotte, enthaltend 0,28 Gew.-% Essigsäure und 0,83 Gew.-% Magnesiumsulfat zugeführt und beides vermischt. Die Temperaturen in den Fällreaktoren K1 bis K4 waren wie in Beispiel 1. Die am vierten Fällreaktor K4 überlaufende Fälldispersion wurde auf einem Filter getrennt.

Das am Filter abgetrennte Polymerisat (Restfeuchte 55 Gew.-%) wurde Elektrolyt-frei gewaschen und im Heißlufttrockner auf einen Restwassergehalt ≦0,5 Gew.-% getrocknet. Eine 10 Stunden-Probe wurde anwendungstechnisch untersucht (siehe Tabellen 1, 2).

Beispiel 2

Wie in Beispiel 1 wurden dem ersten Reaktor der Fällkaskade kontinuierlich 8,0 l/h Latex A und gleichzeitig insgesamt 10 l/h Fällflotte, bestehend aus einem Teilstrom 1 (9,5 l/h), enthaltend 0,15 Gew.-% Essigsäure und 0,54 Gew.-% Magnesiumsulfat, und einem Teilstrom 2 (0,5 l/h), enthaltend 2,8 Gew.-% Essigsäure und 6,3 Gew.-% Magnesiumsulfat zugeführt. Die Temperaturen in den Fällreaktoren betrugen K1: 92 °C; K2: 95 °C; K3: 100 °C; K4: 90 °C. In Reaktor K3 wurde eine Wasserdampfdestillation durchgeführt (0,9 kg Destillat/h). Die am vierten Fällreaktor K4 überlaufende Fälldispersion wurde auf einem Filter getrennt. Nach ca. 2,5 Stunden wurde das am Filter abgetrennte Serum anstelle des Teilstroms 1 der Fällflotte wieder in den Reaktor K1 zurückgeführt (Menge 9,5 l/h) und der Rest (2,5 l/h) entsorgt. Von dem am Filter anfallenden Serum wurden (79 %) zurückgeführt.

Das am Filter abgetrennte Polymerisat (Restfeuchte 50 Gew.-%) wurde Elektrolyt-frei gewaschen und im Heißlufttrockner auf einen Restwassergehalt ≦0,5 Gew.-% getrocknet. Eine 35 Stunden-Probe wurde anwendungstechnisch untersucht (siehe Tabellen 1, 2).

Beispiel 3

Eine Mischung aus 12,5 Gew.-Teilen Latex A, 12,5 Gew.-Teilen Latex B und 75 Gew.-Teilen Latex E wurde dem ersten Reaktor der Fällkaskade K1 kontinuierlich in einer Menge von 6,8 l/h zugeführt und gleichzeitig insgesamt 11,7 l/h Fällflotte, bestehend aus einem Teilstrom 1 (7,0 l/h), enthaltend 0,02 Gew.-% Schwefelsäure und 0,35 Gew.-% Magnesiumsulfat, und einem Teilstrom 2 (4,7 l/h), enthaltend 0,04 Gew.-% Schwefelsäure und 0,68 Gew.-% Magnesiumsulfat. Die Temperaturen in den Fällreaktoren betrugen K1: 100 °C; K2: 100 °C; K3: 100 °C; K4: 90 °C. In den Reaktoren 1 und 3 wurde eine Wasserdampfdestillation durchgeführt (∊ 1,5 kg Destillat/h). Die am vierten Fällreaktor K4 überlaufende Fälldispersion wurde auf einem Filter getrennt. Nach ca. 3 Stunden wurde das am Filter abgetrennte Serum anstelle des Teilstroms 1 der Fällflotte wieder in den Reaktor K1 zurückgeführt (Menge 7,0 l/h) und der Rest (7,0 l/h) entsorgt. Von dem insgesamt am Filter anfallenden Serum wurden 50 % zurückgeführt.

Das am Filter abgetrennte Polymerisat (Restfeuchte 49 Gew.-%) wurde Elektrolyt-frei gewaschen und im Heißlufttrockner auf einen Restwassergehalt ≦0,5 Gew.-% getrocknet. Eine 40 Stunden-Probe wurde anwendungstechnisch untersucht (siehe Tabellen 1, 2).

Vergleichsbeispiel 2

Wie im Beispiel 3 wurden dem ersten Reaktor K1 der Fällkaskade kontinuierlich 6,8 l/h Latexmischung A + B + E zugeführt. Gleichzeitig wurde insgesamt 11,7 l/h Fällflotte, enthaltend 0,03 Gew.-% Schwefelsäure und 0,48 Gew.-% Magnesiumsulfat, zugeführt und mit dem Latex vermischt. Die Temperaturen in den Fällreaktoren betrugen K1: 100 °C; K2: 100 °C; K3: 100 °C; K4: 90 °C. Die am vierten Fällreaktor K4 überlaufende Fälldispersion wurde auf einem Filter getrennt.

Das am Filter abgetrennte Polymerisat (Restfeuchte 45 Gew.-%) wurde Elektrolyt-frei gewaschen und im Heißlufttrockner auf einen Restwassergehalt ≦0,5 Gew.-% getrocknet. Eine 10 Stunden-Probe wurde anwendungstechnisch untersucht (siehe Tabellen 1, 2).

Beispiel 4

Dem ersten Reaktor K1 der Fällkaskade wurden kontinuierlich 7,0 l/h eines Gemischs aus Latex C und Latex D im Gewichtsverhältnis 1:5 zugeführt und gleichzeitig insgesamt 11 l/h Fällflotte, bestehend aus einem Teilstrom 1 (6,0 l/h), enthaltend 0,2 Gew.-% Essigsäure und 2,1 Gew.-% Magnesiumsulfat, und einem Teilstrom 2 (5,0 l/h), enthaltend 0,4 Gew.-% Essigsäure und 4,9 Gew.-% Magnesiumsulfat, und beide mit dem Latex vermischt. Die Temperaturen in den Fällreaktoren betrugen K1: 95 °C; K2: 98 °C; K3: 100 °C; K4: 85 °C. In Reaktor K3 wurde eine Wasserdampfdestillation durchgeführt (1,5 kg Destillat/h). Die am vierten Fällreaktor K4 überlaufende Fälldispersion wurde auf einem Filter getrennt. Nach 3 Stunden wurde das am Filter abgetrennte Serum anstelle des Teilstroms 1 der Fällflotte wieder in den Fällkessel 1 zurückgeführt (Menge: 6,0 l/h) und der Rest (5,2 l/h) entsorgt. Von dem insgesamt am Filter anfallenden Serum wurden 54 % zurückgeführt.

Das am Filter abgetrennte Polymerisat (Restfeuchte 60 Gew.-%) wurde Elektrolyt-frei gewaschen und im Heißlufttrockner auf einen Restwassergehalt ≦0,5 Gew.-% getrocknet. Eine 30 Stunden-Pulverprobe wurde analytisch untersucht (siehe Tabelle 1).

Vergleichsbeispiel 3

Wie im Beispiel 4 wurden dem ersten Reaktor K1 der Fällkaskade kontinuierlich 7,0 l/h Latex D + C zugeführt und gleichzeitig insgesamt 11 l/h Fällflotte, enthaltend 0,3 Gew.-% Essigsäure und 3,4 Gew.-% Magnesiumsulfat. Die Temperaturen in den Fällreaktoren betrugen K1: 95 °C; K2: 99 °C; K3: 99 °C; K4: 85 °C. Die am vierten Fällreaktor überlaufende Fälldispersion wurde auf einem Filter getrennt.

Das am Filter abgetrennte Polymerisat (Restfeuchte 65 Gew.-%) wurde Elektrolyt-frei gewaschen und im Heißlufttrockner auf einen Restwassergehalt ≦0,5 Gew.-% getrocknet. Eine 10 Stunden-Pulverprobe wurde analytisch untersucht (siehe Tabelle 1).

Tabelle 1 zeigt, daß erfindungsgemäß Vinylpolymerisatlatices in einer Fällkaskade mit erheblich reduziertem Abwasser-Anfall und deutlich reduziertem Bedarf an Koagulationshilfsstoffen zu Pulver aufgearbeitet werden können, ohne Verschlechterung der Gebrauchseigenschaften der Vinylpolymerisatpulver.

Tabelle 2 belegt gute Gebrauchseigenschaften der erfindungsgemäß aufgearbeiteten Polymerisatpulver nach thermoplastischer Verarbeitung.

**Tabelle 1** - Verfahrensparameter und Pulvereigenschaften

| Verfahrensparameter (stationärer Betrieb) | Beispiele | | | | Vergleichsbeispiele | | |
|---|---|---|---|---|---|---|---|
| | 1 | 2 | 3 | 4 | 1 | 2 | 3 |
| Fällmittelbedarf (Gew.-% Polymer) | 1,7 | 1,7 | 1,5 | 9,7 | 4,0 | 2,6 | 14,8 |
| Fällwasserbedarf (Gew.-% Polymer) | 18 | 18 | 203 | 183 | 364 | 509 | 403 |
| Abwassermenge (Gew.-% Polymer) | 91 | 124 | 368 | 245 | 437 | 609 | 374 |
| Abwasserbelastung TOC (mg/l) *) | 3700 | 2600 | 2500 | 2200 | 1900 | 1900 | 4800 |
| Serum-Rückführung (Gew.-% Gesamtfiltrat) | 79 | 79 | 50 | 59 | 0 | 0 | 0 |
| Restmonomergehalt (Polymerfeuchtgut/ppm) | 2800 | 900 | 1700 | 1200 | 3100 | 3800 | 3200 |
| Korngrößenverteilung % | | | | | | | |
| <0,1 mm | 10 | 2 | 10 | 15 | 12 | 19 | 16 |
| >0,1 mm | 62 | 53 | 82 | 58 | 57 | 43 | 65 |
| >0,5 mm | 16 | 22 | 3 | 14 | 19 | 17 | 12 |
| >0,8 mm | 5 | 10 | 1 | 8 | 7 | 8 | 5 |
| >1,0 mm | 6 | 10 | 3 | 4 | 5 | 13 | 2 |
| >2,0 mm | 1 | 3 | 1 | 1 | 0 | 0 | 0 |
| Druckbelastung | + | + | + | + | + | + | + |

*) TOC: Gehalt an gebundenem Kohlenstoff nach Abwasserpyrolyse

Tabelle 2 - Anwendungstechnische Eigenschaften

| | Beispiele | | | Vergleichsbeispiele | | |
|---|---|---|---|---|---|---|
| | I | II | III | I (V) | II (V) | III (V) |
| **Zusammensetzung:** | | | | | | |
| Polymer Beispiel 2 | 40 | – | 24 | – | – | – |
| Polymer Beispiel 3 | – | 100 | – | – | – | – |
| Polymer Vergl.-Bsp. 1 | – | – | – | 40 | – | 24 |
| Polymer Vergl.-Bsp. 2 | – | – | – | – | 100 | – |
| SAN-Copolymerisat*) | 60 | – | 16 | 60 | – | 16 |
| PC (Makrolon 2600, Bayer AG) | – | – | 60 | – | – | 60 |
| **Eigenschaften:** | | | | | | |
| Kerbschlagzähigkeit (kJ/m$^2$) | | | | | | |
| Izod $a_k$ (23°C, MT 240°C) | 32 | 13 | | 32 | 13 | |
| Izod $a_k$ (23°C, MT 260°C) | | | 55 | | | 54 |
| Härte $H_c$ (30') | 86 | 118 | | 87 | 118 | |
| Vicat B 120 (°C) | 101 | 115 | 123 | 100 | 113 | 123 |
| Oberflächenqualität | | | | | | |
| Rohton (MT 240°C) | + | + | + | + | + | + |
| (MT 260°C) | + | + | + | + | + | + |
| (MT 280°C) | + | + | + | + | o | o |
| (MT 310°C) | | | | | | |
| Glanzgrad | 84 | 79 | | 87 | 86 | o |

*) SAN-Copolymerisat Styrol/Acrylnitril-Comonomerverhältnis 72/28 Gew.-Teile; $M_W$ = 110 kg/mol

**Patentansprüche**

1. Verfahren zur kontinuierlichen Aufarbeitung von Vinylpolymerisatlatices zu thermoplastisch verarbeitbaren Vinylpolymerisatpulvern, dadurch gekennzeichnet, daß man einen Strom eines Vinylpolymerisatla-

EP 0 459 161 B1

tex durch Zufügen eines Stroms eines Koagulans unter intensiver Durchmischung und Scherung in einer Kesselkaskade bei einer mittleren Verweilzeit pro Kessel von 10 bis 60 Minuten bei Temperaturen von 50 bis 120°C koaguliert, wobei gegebenenfalls flüchtige Hilfsstoffe und restliche Monomere im Polymerisat durch Wasserdampfdestillation entfernt werden und ein Teil des vom Vinylpolymerisat abgetrennten Serums dem Strom des Koagulans zugefügt wird.

**Claims**

1. Process for continuously working up vinyl polymer latices into vinyl polymer powders which may be processed as thermoplastics, characterised in that a stream of vinyl polymer latex is coagulated by adding a stream of a coagulant with intense mixing and shearing in a cascade of vessels with an average residence in each vessel of 10 to 60 minutes at temperatures of 50 to 120°C, wherein volatile auxiliaries and residual monomers in the polymer are optionally eliminated by steam distillation and a proportion of the serum separated from the vinyl polymer is added to the stream of coagulant.

**Revendications**

1. Procédé pour transformer en continu des latex d'un polymère vinylique en des poudres de polymères vinyliques transformables par voie thermoplastique, procédé caractérisé en ce qu'on fait coaguler un courant d'un latex de polymère vinylique par introduction d'un courant d'agent de coagulation, avec mélangeage intensif et cisaillement dans une cascade de récipients avec un temps moyen de séjour par récipient de 10 à 60 min à des températures de 50 à 120°C, des adjuvants volatils et des monomères restant éventuellement dans le polymère étant éliminés par entraînement à la vapeur d'eau, et une partie du sérum séparé du polymère vinylique étant acheminée vers le courant de l'agent de coagulation.

FIG.1

EP 0 459 161 B1